# EUROPEAN PATENT APPLICATION

(11) **EP 3 009 911 A1**
(43) Date of publication of application: **20.04.2016**
(21) Application number: 14188814.9
(22) Date of filing: 14.10.2014
(51) Int. Cl.: G06F 1/025

(54) **Signal generating device and integrated circuit**

(71) Applicant: Conti Temic Microelectronic GmbH, 90411 Nürnberg (DE); Freescale Semiconductor, Inc., Austin, TX 78735 (US)
(72) Inventor: Göpfert, Christian, 88099 Neukirch (DE); Brett, Maik, 82024 Taufkirchen (DE); Mittal, Sumit, 201301 Noida, Uttar Pradesh (IN); Srivastava, Alok, Indirapuram, 201014 Ghazaibad (IN)

(57) **Abstract**

The present invention discloses a signal generating device to generate at least one output signal, having at least one signal table, which has a large number of table entries for the at least one output signal that specify a signal state for the at least one output signal for each specified point in time, and having a switching means which is configured on the basis of the table entries to switch the at least one output signal to the respective signal state specified in the corresponding table entry at the respective specified points in time. Furthermore the present invention discloses a corresponding integrated circuit and a corresponding method.

## Description

The present invention relates to a signal generating device to generate at least one output signal and to a corresponding integrated circuit.

### Technical Background

These days various clock generators are used in integrated circuits. In particular such clock generators are used in order to generate a system cycle across the system.

If complex time-dependent signal waveforms are to be generated, such clock generators cannot however be used, they can only generate a clock signal with a predetermined fixed cycle.

For this reason, specialised signal generating units are used in integrated circuits in order to generate such complex time-dependent signals. For example, special PWM units can be used in order to generate pulse width modulated, PWM, signals.

However, such specialised signal generating units are not very flexible.

As an alternative to the specialised signal generating units, complex time-dependent signal waveforms can also be generated programmatically using software. This, however, increases the programming effort and the size of the resultant executable program files. Accordingly there is a need to provide a signal generating device which overcomes the above mentioned drawbacks.

It is therefore an object of the present invention to provide a device for generating complex signal waveforms.

This object is achieved by a signal generating device comprising the features of claim 1, an integrated circuit comprising the features of claim 11, and by a method for generating at least one output signal comprising the features of claim 13.

The invention provides according to a first aspect a signal generating device for generating at least one output signal, said signal generating device comprising at least one signal table, which has a large number of table entries for the at least one output signal that specify a signal state of the at least one output signal for each specified point in time, and having a switching means which is configured on the basis of the table entries to switch the at least one output signal to the respective signal state specified in the corresponding table entry at the respective specified points in time.

According to a further aspect of the present invention, an integrated circuit is provided having a signal generating device according to the first aspect of the present invention and having at least one digital circuit means, which is coupled to the signal generating device and is configured to receive at least one output signal from the signal generating device.

According to a third aspect of the invention a method for generating at least one output signal is provided comprising at least one signal table which has a plurality of table entries for the at least one output signal that specify a signal state for the at least one output signal for respective specified points in time, wherein the at least one output signal is switched to the respective signal state specified by the corresponding table entry at the respective specified point in time.

The present invention is aware of the complexity of today's options for generating signals.

The underlying idea of the present invention is therefore to provide an option where a large number of output signals can be generated in a simple manner.

For this purpose, the present invention provides according to a first aspect a signal generating device, which has at least one signal table. Corresponding signal states for the output signals for respective different points in time are indicated in the signal table. The signal table therefore defines the cycle of the signal changes over time.

Furthermore, in order to put the signal waveforms specified by the table into practice, the signal generating device according to the first aspect of the present invention comprises a switching means which analyses the table entries and switches or sets the respective output signals in accordance with the respective signal states specified in the table at the points in time specified in the table.

It thus becomes possible to specify even complex signal waveforms in the signal table for a large number of signals in a simplified manner. The switching means are adapted to analyse the signal table line for line and to switch the output signals accordingly.

Advantageous embodiments and developments will emerge from the sub-claims and from the description with reference to the drawings.

In a possible embodiment, the signal generating device has a clock input, which is configured to receive a cycle. Furthermore, the signal generating device has a clock counter which is configured to count cycles of the received clock and to provide a corresponding counter value, the specified points in time having absolute and/or relative counter values. This facilitates the use of the signal generating device with an external clock source and recording of the time based on the external clock source.

In a further possible embodiment, the signal generating device has a clock divider, which is upstream of the clock input and has an adjustable divider ratio. This facilitates an individual adjustment of the time basis for the signal generating device to the respective application.

In a further possible embodiment, the table entries are filed in the signal table in ascending order by time. This facilitates a simple sequential processing of the respective signal table. Alternatively, each table entry can have a goto reference to the next table entry to be processed.

In a possible embodiment, at least one of the signal tables stores configuration data which specifies at least one kind of signal for the at least one output signal. As a result, it is possible to generate a large number of different signals or kinds of signal with just one signal generating device and based on a single signal table.

In a possible embodiment, the kind of signal constitutes a pulse signal or a logic signal or a change signal or a clock signal. This facilitates a simple adjustment of the signal generating device to the respective application.

In a possible embodiment, the signal states for a pulse signal specified by the table entries specify when a pulse signal should emit a pulse. For example, a logic one 1 or logic high H for a pulse signal can be given in the signal table for a point in time. This means that the pulse signal for one period of the clock is set to High H or logic 1. Alternatively, an inverse logic can be used and the signal is set to Low L or logic 0 for one period of the clock.

In a further possible embodiment, the signal states for a logic signal specified by the table entries specify a logic state, in particular 0 or 1 or Z or X, X meaning that the signal state is irrelevant. Z stands for "high impedance" and means that the output signal displays neither a logic 1, High H nor a logic 0, Low L but rather that the signal pin has a high impedance.

In a possible embodiment, the signal states for a change signal specified by the table specify a logic state, in particular logic 0 or 1 or INV or X, INV meaning that the output signal is inverted and X meaning that the signal state is irrelevant.

In a further possible embodiment, the signal states for a clock signal specified by the table entries specify a logic state, in particular logic 0 or TR or T or logic 1, TR (toggle rising) meaning that the output signal is inverted with every rising edge of a clock and T (toggle) meaning that the output signal is inverted with every signal edge of a clock.

In a possible embodiment, the switching means is configured to hold a signal state until a table entry for the relevant output signal specifies a new state. It thus becomes possible to generate defined signal waveforms for any selected period.

In a further possible embodiment, an adjustable counter value is specified for each of the signal tables and indicates how often the respective signal table is to be processed by the switching means. For example, it can also be specified which action the switching means performs when the counter value is achieved. In a possible embodiment, the switching means can change to an idle state. Alternatively, the switching means can process the next signal table. For this purpose, a table indicator can be recorded in the signal table, which for example, refers to the next signal table. Alternatively, a fixed sequence for processing the signal tables can be specified.

In a possible embodiment, a maximum period is specified for each of the signal tables during which the respective signal table should be processed by the switching means. As a result, it is possible to directly specify a period of time for processing a signal table instead of defining a number of times it is to be processed.

In a possible embodiment, the signal generating device has a configuration interface which is configured to receive updated table entries for the at least one signal table and to file them in the respective signal table. Alternatively, a whole signal table can also be received via the configuration interface. As a result, it is possible to automatically update a signal table during the operation of the signal generating device.

In a possible embodiment, a direct memory access means, DMA means, is provided, which is configured to write the updated table entries into a memory in which the respective signal table is stored. As a result, a computer means of the signal generating device is not stressed or disrupted during an update of the signal tables.

In a possible embodiment, a computer means is provided, which is configured to receive the updated table entries and to write them into the memory in which the respective signal table is stored. For this purpose, an interrupt can be triggered in the computer means, for example, at the beginning or end of processing of a signal table.

In a possible embodiment, the signal generating device has a first control input, which is configured to receive a start signal, the switching means being configured to begin processing a signal table after receiving the switch signal. This facilitates the use of the signal generating device in a controlled operating mode, similar to a slave system.

In a possible embodiment, the signal generating device has a second control input, which is configured to receive a change signal, the switching means being configured to change over from the processed signal table after receiving the change signal. This likewise facilitates the use of the signal generating device in a controlled operation mode similar to a slave system.

In a possible embodiment, the digital circuit means is configured as a signal processing means, which is coupled to the signal generating device and is configured to receive at least a first output signal of the signal generating device. As a result, current tasks can be synchronised in the signal processing means or data capture can be controlled via an analogue/digital converter.

In a possible embodiment, the digital circuit means is configured as a signal generating means, which is coupled to the signal generating device and is configured to receive at least a second output signal of the signal generating device. As a result, the signal generation can, for example, be controlled with a digital/analogue converter.

In a possible embodiment, the digital circuit means is configured as an input/output means, which is coupled to the signal generating device and is configured to receive at least a third output signal of the signal generating device. As a result it is possible to emit the output signals to other, for example external, components. Alternatively, signals, for example the start signal and/or the change signal, can also be received via the input/output means.

In a possible embodiment, the digital circuit means is configured as a PWM generating means, which is coupled to the signal generating device and is configured to receive at least a fourth output signal of the signal generating device. As a result, PWM signal waveforms can be generated with a complex time characteristic.

In a possible embodiment, the signal generating device generates interruptions, also called interrupts, and DMA requests for a computer means, for example, a CPU or a similar device.

The above embodiments and developments can be combined with each other as required, wherever practical. Further possible embodiments, developments and implementations of the invention also comprise combinations that are not mentioned explicitly of features of the invention described above or below in relation to the embodiments. In particular, the person skilled in the art will add individual aspects as improvements or additions to the respective basic form of the present invention in the process.

### Brief Description of the Drawings

The present invention is described in more detail below with reference to the embodiments shown in the schematic figures of the drawings, in which:
- Fig. 1: is a block diagram of an embodiment of a signal generating device according to an aspect of the invention;
- Fig. 2: is a block diagram of an embodiment of an integrated circuit according to a further aspect of the invention;
- Fig. 3: is a block diagram of another embodiment of a signal generating device according to the present invention;
- Fig. 4: is a block diagram of another embodiment of an integrated circuit according to the present invention;
- Fig. 5: is a sequence diagram of the operation of an embodiment of a signal generating device according to the present invention; and
- Fig. 6: is a diagram of an embodiment of output signals according to the present invention.

The same or functionally equivalent elements and devices have been provided with the same reference numerals in all of the drawings - unless otherwise stated.

### Detailed Description of Embodiments

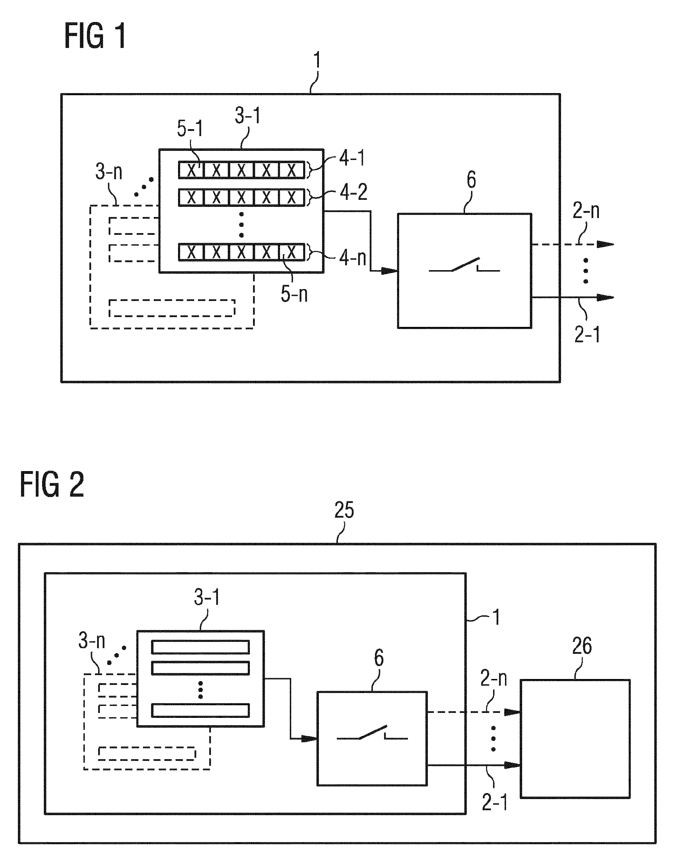

Fig. 1 is a block diagram of an embodiment of a signal generating device 1 according to the first aspect of the invention.

The signal generating device 1 comprises a plurality of signal tables 3-1 - 3-n, each having table entries 4-1 - 4-n in which signal states 5-1 - 5-n are specified.

Furthermore, the signal generating device 1 comprises a switching means 6, which reads the table entries 4-1 - 4-n from one of the signal tables 3-1 - 3-n and switches the output signals 2-1 - 2-n based on the signal states 5-1 - 5-n recorded in the table entries 4-1 - 4-n.

In a possible embodiment, the switching means 6 can, for example, read the next table entry 4-1 - 4-n out of the signal table 3-1 - 3-n currently being processed in each duty cycle of a cycle 8 of the signal generating device 1 and set the appropriate output signals 2-1 - 2-n according to the respective signal states 5-1 - 5-n.

Alternatively, the individual table entries 4-1 - 4-n can have a time designation 35, which states in which duty cycle of the cycle the respective table entry 4-1 - 4-n is to be performed. For this purpose, the time designation 35 can constitute an absolute time designation 35 or a relative time designation 35.

In a possible embodiment, the signal generating device 1 can, for example, be configured as an ASIC or a similar circuit, in which the function of the signal generating device 1 is constructed from digital switching elements. Alternatively, the method according to the present invention can also be implemented as a computer program product, which can be executed by computer means, for example, by a processor or a microprocessor.

The content of the signal tables 3-1 - 3-n can, for example, be stored in a volatile or a non-volatile memory. For example, the content of the signal tables 3-1 - 3-n can be stored permanently in a non-volatile memory, for example a flash memory, and loaded therefrom into a volatile memory, for example, a RAM memory, each time the signal generating device 1 is operated.

The signal generating device 1 facilitates the generation of a large number of complex signal waveforms for the output signals 2-1 - 2-n based on the signal tables 3-1 - 3-n. This is explained in more detail in conjunction with the following drawings.

Fig. 2 is a block diagram of an embodiment of an integrated circuit 25 according to an aspect of the invention.

The integrated circuit 25 comprises an embodiment of the signal generating device 1, which is coupled to a digital circuit means 26 and provides the output signals 2-1 - 2-n. In Fig. 2 only one digital circuit means 26 is shown. In other embodiments as many digital circuit means 26 as required are possible.

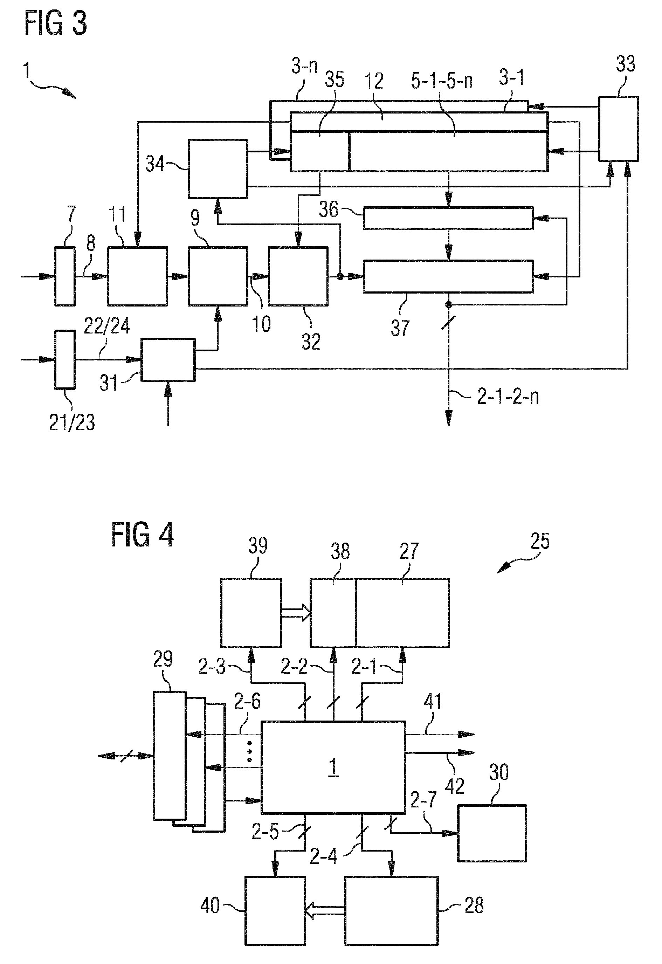

Fig. 3 is a block diagram of another embodiment of a signal generating device 1 according to the invention.

In Fig. 3 the switching means 6 is not shown explicitly. Rather the elements that perform the function of the switching means 6 are illustrated.

The signal generating device 1 has a clock input 7, via which the signal generating device 1 receives a cycle 8. This clock 8 is fed to a clock divider 11, which feeds the divided clock 8 to a clock counter 9. The clock counter 9 displays the counter value 10, which indicates the number of clock cycles of the divided clock 8 that have elapsed.

This counter value 10 is fed to a comparator 32, which compares said counter value 10 to a time designation 35 of the current table entry 4-1 - 4-n. If the time designation 35 of the current table entry 4-1 - 4-n corresponds with the counter value 10, the output signals 2-1 - 2-n are set via a signal register 37 according to the signal states 5-1 - 5-n stored in the current table entry 4-1 - 4-n. Subsequently, the next table entry 4-1 - 4-n is selected and the procedure is repeated.

Furthermore, the signal generating device 1 in Fig. 3 has a control input 21/23 which performs the function of the first control input 21 as well as the second control input 23. A start signal 22 and a change signal 24 are received via this control input 21/23 when the signal generating device 1 is working in a slave mode, meaning that it is controlled from outside and fed to an edge detector, which detects and passes on a change in the start signal 22 and the change signal 24.

Furthermore, in Fig. 3 a selector 33 is provided, which selects the signal table 3-1 - 3-n to be processed. For this purpose the selector 33 receives the change signal 24 and/or a value of a counter 34 which counts the entries of the signal table 3-1 - 3-n.

Finally, it can be seen in Fig. 3 that the signal tables 3-1 - 3-n also have configuration data 12 in addition to the signal states 5-1 - 5-n and respective time designations 35 for the table entries 4-1 - 4-n.

The clock divider 11 can, for example, be configured via the configuration data 12. A mask 36 can, however, also be configured which masks out the output signals 2-1 - 2-2 that are not meant to be updated.

In the embodiment in Fig. 3, the individual clock cycles of the divided clock 8 are counted and the counter value 10 is compared to the time designations 35 of the respective table entries 4-1 - 4-n (not shown explicitly). If the counter value 10 equals the time designation of the respective table entry, the output signals 2-1 - 2-n are set according to the signal states 5-1 - 5-n specified in the table entry.

In an embodiment, the table entries 4-1 - 4-n are arranged in time sequence. As a result, after one table entry 4-1 - 4-n has been processed, the next table entry 4-1 - 4-n can be selected and its time designation 35 compared to the counter value 10 without the next respective table entry 4-1 - 4-n having to be sought first.

If one signal table 3-1 - 3-n has been processed, its processing is either repeated or another signal table 3-1 - 3-n is selected. This procedure can be defined by the configuration data 12.

Fig. 4 is a block diagram of an embodiment of an integrated circuit 25 according to the invention.

The integrated circuit 25 has a signal generating device 1, which is coupled to a signal processing means 27, a signal generating means 28, an input/output means 29 and a PWM generating means 30.

The signal processing means 27 is provided with the output signal 2-1 by the signal generating device 1. The signal generating means 28 is provided with output signal 2-4. The output means 29 is provided with output signal 2-6 and the PWM generating means 30 is provided with output signal 2-7.

Furthermore, the signal processing means 27 has a acquisition unit 38, which is coupled to an A/D converter 39, in order to acquire the signals converted by the A/D converter 39. In order to facilitate the time-synchronised data capture, the acquisition unit 38 is provided with the output signal 2-2, and the A/D converter 39 is provided with output signal 2-3. The output signals 2-1 - 2-3 can, for example, synchronise tasks that are running in the signal processing means 27 and trigger data conversion by the A/D converter.

Furthermore, a D/A converter 40 is provided in the integrated circuit 25 and coupled to the signal generating means 28 and is configured to convert the signals generated by the signal generating means 28 into analogue signals. In order to be able to control the signal conversion by the D/A converter 40, it receives the output signal 2-5.

The input/output means 29 can pass on the output signal 2-6, for example to output pins of the integrated circuit 25, and the PWM generating means 30 can generate complex PWM signal waveforms based on the output signal 2-7.

Finally, the signal generating device 1 can emit an interrupt signal 41 and a DMA signal 42 for a processor, thus making it possible for the DMA signal 42 to trigger certain data transfers via a DMA (direct memory access) module, for example. The interrupt signal 41 can on the other hand trigger interrupts in the processor.

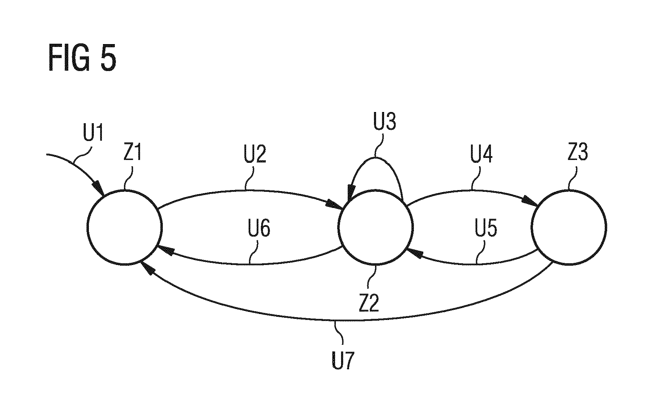

Fig. 5 is a sequence diagram of the operation of an embodiment of a signal generating device 1 according to the invention.

In Fig. 5 three states Z1 - Z3 are shown. The first state Z1 is a idle state. The second state Z2 represents the processing of a first signal table. Finally, the third state Z3 represents the processing of a second signal table. The number of states Z1 - Z3 is chosen simply by way of illustration. The number of states Z-1 - Z3 merely provides examples for other embodiments where further states can be provided for further signal tables.

After the signal generating device 1 has been reset, the signal generating device 1 changes to the first state Z1 via the first transition U1. The second transition U2 constitutes the transition from the holding state Z1 to the state Z2, in which the first signal table is processed. This transition can, for example, be triggered by a start command.

If, for example, it is stated in the configuration data 12 that the first signal table is to be processed more than once then transition U3 leads to state Z2 again and the first signal table is processed again.

A change mode or toggle mode can, however, also be indicated in the configuration data 12, for example, which results in the transition U4 leading to state Z3 after the first signal table has been processed where the second signal table is processed. If the change mode is selected, the transition U5 leads back to state Z2 after the second signal table has been processed.

If a counter value, which states how often the respective signal table is to be performed, is exceeded, transition U6 leads out of state Z2 back to state Z1 and transition U7 leads out of state Z3 back to state Z1. Transitions U6 and U7 are also performed if a stop signal is received via a control interface.

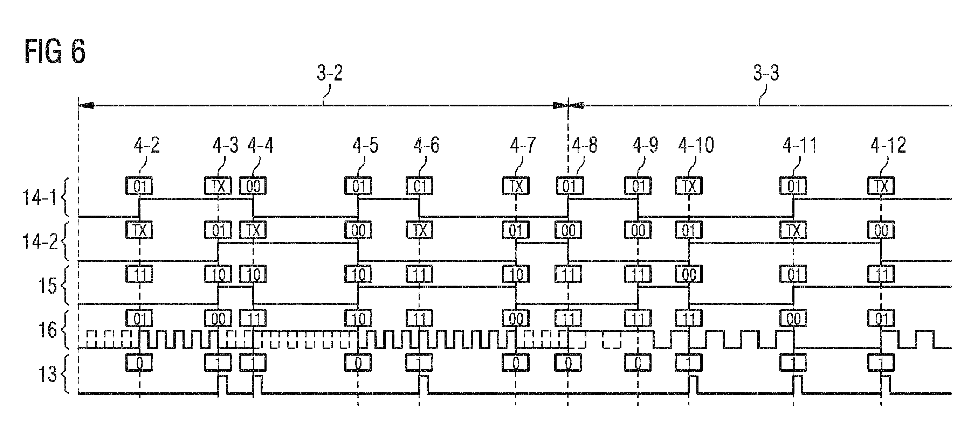

Fig. 6 shows a diagram of an exemplary embodiment of output signals 13, 14-1, 14-2, 15, 16 generated according to the invention. In Fig. 6 the signal waveforms are shown based on two consecutive signal tables 3-2, 3-3. The first signal table 3-2 has seven table entries 4-2 - 4-8. The second signal table 3-3 has four table entries 4-9 - 4-12. Each of the table entries 4-2 - 4-12 specifies the signal states 5-1 - 5-n for the output signals 13, 14-1, 14-2, 15 and 16 at a specified point in time. It can be seen that the time intervals or time delays between the signal changes called for by table entries 4-2 - 4-12 are of varying lengths. These can be freely selected when the respective signal tables 3-2, 3-3 are prepared.

The output signal 14-1 shown topmost in Fig. 6 is a logic signal. The second output signal 14-2 is likewise a logic signal. The third output signal 15 is a change signal, the fourth output signal 16 is a clock signal and the last output signal 13 is a pulse signal.

Before the first table entry 4-2, all of the output signals 13 - 16 have the logic value 0 or Low L. The first table entry 4-2 switches the logic signal 14-1 to logic 1 or High H, the logic signal 14-2 remains at logic 0 or Low L, the change signal 15 is not switched over, the clock signal 16 is set to T, i.e. to Toggle, and the pulse signal 13 is not activated. Until the point in time for which table entry 4-3 is provided, all of the output signals 13 - 15 hold their values and the clock signal 16 changes its value with every signal edge of a clock 8.

The second table entry 4-3 leaves the logic signal 14-1 at logic 1 or High H, the logic signal 14-2 is switched to logic 1 or High H, the change signal 15 is switched over, the clock signal 16 is set to 0, i.e. Low L, and the pulse signal 13 is activated and therefore emits a logic 1 or High H signal for one cycle. Until the point in time for which table entry 4-4 is provided, all of the output signals 14-1 - 16 hold their values and the pulse signal 13 changes its value after one cycle to logic 0.

The third table entry 4-4 switches the logic signal 14-1 to logic 0 or Low L, leaves the logic signal 14-2 at logic 1 or High H, switches over the change signal 15, i.e. to logic 0 or Low L, the clock signal 16 is set to logic 1, i.e. High H, and the pulse signal 13 is activated and therefore emits a logic 1 or High H for one cycle.

The fourth table entry 4-5 switches the logic signal 14-1 to logic 1 or High H, switches the logic signal 14-2 to logic 0 or Low L, switches over the change signal 15, i.e. to logic 1 or High H, the clock signal 16 is activated and changes its value with every edge of the cycle 8 and the pulse signal 13 is not activated.

The fifth table entry 4-6 switches the logic signal 14-1 to logic 0 or Low L, leaves the logic signal 14-2 at logic 0 or Low L, does not switch over the change signal 15, leaves the clock signal 16 activated and activates the pulse signal 13.

The sixth table entry 4-7 leaves the logic signal 14-1 at logic 0 or Low L, switches the logic signal 14-2 to logic 1 or High H, switches over the change signal 15, switches the clock signal 16 off, i.e. to logic 0 or Low L, and does not activate the pulse signal 13.

The seventh table entry 4-8 switches the logic signal 14-1 to logic 1 or High H, switches the logic signal 14-2 to logic 0 or Low L, does not switch over the change signal 15, switches the clock signal 16 to constantly active, i.e. to logic 1 or High H, and does not activate the pulse signal 13.

The first signal table 3-2 is thus completely processed. The output signals 13 - 16 are subsequently changed according to the second signal table 3-3.

It can be clearly seen in Fig. 6 that very complex signal waveforms for a large number of output signals 13 - 16 can be generated in a simplified manner using the present invention.

In Fig. 6 the value 1 was equated with High H. In further embodiments an inverted logic can also be applied in which the value 1 corresponds to a logic Low L.

Although the present invention was described above with reference to preferred embodiments, it is not limited to such, but is modifiable in a diverse manner. In particular, the present invention can be changed or modified in diverse ways without straying from the essence of the invention.

### List of reference numerals

- 1: signal generating device
- 2-1 - 2-n: output signal
- 3-1 - 3-n: signal table
- 4-1 - 4-n: table entry
- 5-1 - 5-n: signal state
- 6: switching means
- 7: clock input
- 8: clock
- 9: clock counter
- 10: counter value
- 11: clock divider
- 12: configuration data
- 13: pulse signal
- 14-1, 14-2: logic signal
- 15: change signal
- 16: clock signal
- 21: first control input
- 22: start signal
- 23: second control input
- 24: change signal
- 25: integrated circuit
- 26: digital circuit means
- 27: signal processing means
- 28: signal generating means
- 29: input/output means
- 30: PWM generating means
- 31: edge detector
- 32: comparator
- 33: selector
- 34: counter
- 35: time designation
- 36: mask
- 37: signal register
- 38: acquisition unit
- 39: A/D converter
- 40: D/A converter
- 41: interrupt signal
- 42: DMA signal

- Z1 - Z3: states
- U1 -U7: transitions

## Claims

1. A signal generating device (1) for generating at least one output signal (2-1 - 2-n), comprising
at least one signal table (3-1 - 3-n), which has a plurality of table entries (4-1 - 4-n) for the at least one output signal (2-1 - 2-n) that specify a signal state (5-1 - 5-n) for the at least one output signal (2-1 - 2-n) for respective specified points in time, and
a switching means (6), which is configured to switch the at least one output signal (2-1 - 2-n) to the respective signal state (5-1 - 5-n) specified by the corresponding table entry (4-1 - 4-n) at the respective specified points in time on the basis of the table entries (4-1 - 4-n).

2. The signal generating device according to claim 1, comprising
a clock input (7), which is configured to receive a clock (8) ;
at least one clock counter (9), which is configured to count clock periods of the received clock and to provide a corresponding counter value (10),
the specified points in time constituting specified absolute and/or relative counter values (10).

3. The signal generating device according to claim 2, comprising a clock divider (11), which is upstream of the clock input (7) and has an adjustable divider ratio.

4. The signal generating device according to any of the preceding claims 1 to 3, the table entries (4-1 - 4-n) being filed in ascending order by time in the signal table (3-1 - 3-n).

5. The signal generating device according to any of the preceding claims 1 to 4,
wherein at least one of the signal tables (3-1 - 3-n) has configuration data (12) which specifies at least one kind of signal for the at least one output signal (2-1 - 2-n);
the kind of signal constituting a pulse signal (13) or a logic signal (14-1, 14-2) or a change signal (15) or a clock signal (16).

6. The signal generating device according to claim 5,
wherein the signal states (5-1 - 5-n) indicated by the table entries (4-1 - 4-n) for a pulse signal (13) specify when a pulse signal should emit a pulse; and/or
wherein the signal states (5-1 - 5-n) indicated by the table entries (4-1 - 4-n) for a logic signal (14-1, 14-2) specify a logic state, in particular a logic 0 or logic 1 or Z or X, whereby X indicates that the signal state (5-1 - 5-n) will not change, and Z represents a high impedance mode; and/or
wherein the signal states (5-1 - 5-n) indicated by the table entries (4-1 - 4-n) for a change signal (15) specify a logic state, in particular logic 0 or logic 1 or INV or X, whereby INV indicates that the output signal (2-1 - 2-n) is inverted and X indicates that the signal state (5-1 - 5-n) will not change; and/or
wherein the signal states (5-1 - 5-n) indicated by the table entries (4-1 - 4-n) for a clock signal (16) specify a logic state, in particular logic 0 or TR or T or logic 1, whereby TR indicates that the output signal(2-1 - 2-n) is inverted with every rising edge of a cycle and T indicates that the output signal (2-1 - 2-n) is inverted with every edge of a cycle.

7. The signal generating device according to any of the preceding claims 1 to 6,
the switching means (6) being configured to hold a signal state (5-1 - 5-n) until a table entry (4-1 - 4-n) for the relevant output signal (2-1 - 2-n) specifies a new signal state (5-1 - 5-n).

8. The signal generating device according to any of the preceding claims 1 to 7,
an adjustable counter value being specified for each of the signal tables (3-1 - 3-n), which states how often the respective signal table (3-1 - 3-n) is to be processed by the switching means (6); and/or
a maximum period of time being specified for each of the signal tables (3-1 - 3-n) during which the respective signal table (3-1 - 3-n) is to be processed by the switching means (6).

9. The signal generating device according to any of the preceding claims 1 to 8, comprising
a configuration interface, which is configured to receive updated table entries (4-1 - 4-n) for the at least one signal table (3-1 - 3-n) and to store these table entries in the respective signal table (3-1 - 3-n);
a DMA unit, which is configured to read the updated table entries (4-1 - 4-n) from a memory in which the relevant signal table (3-1 - 3-n) is stored; and/or
a computer means, which is configured to receive the updated table entries (4-1 - 4-n) and to read them from the memory in which the relevant signal table (3-1 - 3-n) is stored.

10. The signal generating device according to any of the preceding claims 1 to 9, comprising
a first control input (21), which is configured to receive a start signal (22), the switching means (6) being configured to begin processing a signal table (3-1 - 3-n) after having received the start signal (22); and/or
a second control input (23), which is configured to receive a change signal (24), the switching means (6) being configured to change over the processed signal table (3-1 - 3-n) after having received the change signal (24).

11. An integrated circuit (25), comprising
a signal generating device (1) according to any of the preceding claims 1 to 10; and
at least one digital circuit means (26), which is coupled to the signal generating device (1) and is configured to receive at least one output signal (2-1 - 2-n) from the signal generating device (1).

12. The integrated circuit according to claim 11,
wherein the digital circuit means (26) is configured as:
a signal processing means (27), which is coupled to the signal generating device (1) and is configured to receive at least a first output signal (2-1 - 2-n) from the signal generating device (1); and/or
a signal generating means (28), which is coupled to the signal generating device (1) and is configured to receive at least a second output signal (2-1 - 2-n) from the signal generating device (1); and/or
an input/output means (29), which is coupled to the signal generating device (1) and is configured to receive at least a third output signal (2-1 - 2-n) from the signal generating device (1); and/or
a PWM generating means (30), which is coupled to the signal generating device (1) and is configured to receive at least a fourth output signal (2-1 - 2-n) from the signal generating device (1).

13. A method for generating at least one output signal (2-1 - 2-n) comprising at least one signal table (3-1 - 3-n) which has a plurality of table entries (4-1 - 4-n) for the at least one output signal (2-1 - 2-n) that specify a signal state (5-1 - 5-n) for the at least one output signal (2-1 - 2-n) for respective specified points in time,
wherein the at least one output signal (2-1 - 2-n) is switched to the respective signal state (5-1 - 5-n) specified by the corresponding table entry (4-1 - 4-n) at the respective specified point in time.
